# EUROPÄISCHE PATENTSCHRIFT

(11) **EP 4 398 774 B1**
(45) Veröffentlichungstag und Bekanntmachung des Hinweises auf die Patenterteilung: **31.12.2025**
(21) Anmeldenummer: 22768735.7
(22) Anmeldetag: 23.08.2022
(51) Int. Cl.: A47J 31/36, A47J 31/60

(54) **BRÜHKAMMERHÄLFTE, BRÜHEINHEIT, GETRÄNKEZUBEREITUNGSMASCHINE, SOWIE VERFAHREN ZUM AUSWERFEN EINER KAPSEL UND SYSTEM ZUR GETRÄNKEZUBEREITUNG**
BEVERAGE PREPARATION SYSTEM AND BREWING CHAMBER SECTION, BREWING UNIT, BEVERAGE PREPARATION MACHINE, AND METHOD FOR EJECTING A CAPSULE:
MOITIÉ DE CHAMBRE DE BRASSAGE, UNITÉ DE BRASSAGE, MACHINE DE PRÉPARATION DE BOISSONS, AINSI QUE PROCÉDÉ D'ÉJECTION D'UNE CAPSULE ET SYSTÈME DE PRÉPARATION DE BOISSONS

(30) Priorität: 10.09.2021 EP 21196094
(43) Veröffentlichungstag der Anmeldung: 17.07.2024
(73) Patentinhaber: Delica AG, 5033 Buchs AG (CH)
(72) Erfinder: WÜTHRICH, Martin, 4417 Ziefen (CH); TSCHOPP, Patrick, 4125 Riehen (CH); AFFOLTER, Roland, 5103 Möriken (CH); ZWEIFEL, Micha, 8004 Zürich (CH); THILLA, Tim, 79576 Weil am Rhein (DE); RIESSBECK, Wolfgang, 8597 Landschlacht (CH); KELLER, Marco, 9325 Roggwil (CH); EGGER, Patrick, 9246 Niederbühren (CH)
(74) Vertreter: Hepp Wenger Ryffel AG
(86) Internationale Anmeldenummer: PCT/EP2022/073403
(87) Internationale Veröffentlichungsnummer: WO 2023/036600

(56) Entgegenhaltungen:
- WO-A1-2016/059563
- WO-A1-2018/116279
- WO-A2-2014/016741
- US-A1- 2010 206 177

## Beschreibung

Die vorliegende Offenbarung betrifft eine Brühkammerhälfte, eine Brüheinheit, eine Getränkezubereitungsmaschine, sowie ein Verfahren zum Auswerfen einer Kapsel, und ein System zur Getränkezubereitung gemäss den Oberbegriffen der unabhängigen Ansprüche.

Aus dem Stand der Technik, siehe z.B**.** US 2010/206177 A1, sind verschiedene kapselbasierte Getränkezubereitungsmaschinen mit Brühneinheiten und Brühkammerhälften, sowie unterschiedliche Verfahren zum Kapselmanagement und zur Getränkezubereitung bekannt.

Es ist Aufgabe der Erfindung die Nachteile des Standes der Technik zu überwinden. Insbesondere soll ein System zur Verfügung gestellt werden, welches ein einfaches Bedienen durch einen Benutzer ermöglicht.

Diese Aufgabe wird durch die in den unabhängigen Patentansprüchen definierten Vorrichtungen und Verfahren gelöst. Weitere Ausführungsformen ergeben sich aus den abhängigen Patentansprüchen.

Unter einer Kapsel wird im folgenden eine Kapsel zur Zubereitung eines Getränks oder eines flüssigen Lebensmittels verstanden. Dabei kann die Kapsel einen Kapselkörper umfassen, welcher mit einer Substanz zur Getränkezubereitung befüllt ist. Ebenfalls soll aber unter einer Kapsel auch eine Getränkesubstanz verstanden werden, welche von einer Hülle ummantelt ist. Beispielsweise kann die Getränkesubstanz dabei zu einem vorzugsweise kugelförmigen Pressling verdichtet und und mit einem Hüllmaterial beschichtet oder von einer losen Hülle umschlossen sein. Ebenso kann aber die Kapsel auch eine lose Geträneksubstanz in Pulverform umfassen, welche von einer Hülle umschlossen ist.

Eine hier offenbarte Brüheinheit für eine Getränkezubereitungsmaschine umfasst wenigstens eine erste und eine zweite Brühkammerhälfte. Die Brühkammerhälften sind derart angeordnet, dass sie von einer geschlossenen Stellung zum Ausbilden einer geschlossenen Brühkammer in eine offene Stellung, bei der eine Kapsel in die Brühkammer eingelegt werden kann, relativ zueinander bewegbar sind. Dabei weist die Brüheinheit wenigstens ein, vorzugsweise zwei Haltemittel auf, welche eine Kapsel beim Einlegen der Kapsel in einer Zwischenposition bei offener Stellung zwischen der ersten und der zweiten Brühkammerhälfte in Position halten und beim Schliessen der Brühkammer freigeben. Die erste und zweite Brühkammerhälften sind vor dem Freigeben der Kapsel durch die Haltemittel derart beabstandet, dass die Brühkammerhälften eine Kapsel nicht erfassen können, sodass die Kapsel zwischen den Brühkammerhälften durchfällt, wenn diese von den Haltemitteln nicht gehalten würde.

Durch diese Beabstandung der beiden Brühkammerhälften kann sichergestellt werden, dass eine Kapsel nach Erreichen der Zwischenposition einfach wieder aus der Brüheinheit entnommen werden kann. Lediglich die Haltemittel müssen auseinander bewegt werden, um die Kapsel freizugeben. Entsprechend kann bei einem fälschlichen Einlegen der Kapsel in die Brühkammer die Kapsel wieder entfernt und für eine spätere Benutzung aufbewahrt werden.

Der Abstand zwischen den Brühkammerhälften kann wenigstens 10% grösser als eine grösste Dimension oder ein grösster Durchmesser einer zur Getränkezubereitung in der Brüheinheit vorgesehenen Kapsel vor und/oder nach ihrer Extraktion sein.

Eine kugelförmige oder polygonförmige Kapsel zur Zubereitung einer Kaffeeportion kann eine grösste Dimension oder einen grössten Durchmesser zwischen 21 und 52 mm, bevorzugt zwischen 23 und 42 mm, besonders bevorzugt zwischen 25 und 30 mm, aufweisen. Es sind aber auch kugelförmige oder polygonförmige Kapsel mit einer grössten Dimension oder einem grössten Durchmesser von 50 mm +/-10%, 26 mm +/- 10% oder 23 mm +/- 10% denkbar, je nach Menge der für die Getränkezubereitung benötigten Getränkesubstanz.

Die Kapsel kann in der Zwischenposition und vor dem Freigeben durch die Haltemittel derart geführt und gehalten werden, dass diese keinen mechanischen Kontakt mit der ersten Brühkammerhälfte und/oder der zweiten Brühkammerhälfte aufweist.

Durch die Vermeidung eines mechanischen Kontaktes oder eines physischen Kontaktes der Kapsel mit den Brühkammerhälften kann ein einfaches Einführen der Kapsel erreicht werden. Ebenso ist es dadurch möglich, dass eine Kapsel nach Erreichen der Zwischenposition wieder aus der Brüheinheit entnommen werden kann, ohne dass die Kapsel beschädigt wird. Entsprechend kann bei einem fälschlichen Einlegen der Kapsel in die Brühkammer die Kapsel wieder entfernt und uneingeschränkt für eine spätere Benutzung aufbewahrt werden.

Die Brüheinheit kann Steuerungsmittel aufweisen, welche beim Schliessen der Brühkammer mit den Haltemitteln derart zusammenwirken, dass diese die Kapsel freigeben. Dadurch, dass die Steuerungsmittel direkt mit Brüheinheit verbunden sind, ist eine direkte Kopplung der Bewegung der Brühkammern mit den Haltemitteln einfach realisierbar. Ausserdem muss nicht die Kapsel aus den Haltemitteln geschoben werden, die Haltemittel geben die Kapsel selbstständig frei.

Die Haltemittel können um eine Achse schwenkbar und/oder in eine Achsrichtung verschiebbar gelagert sein. Damit die Brühkammerhälften zusammenfahren können, müssen die Haltemittel aus dem Bereich zwischen den Brühkammerhälften wegbewegt werden. Durch ein Verschwenken um eine Achse und/oder eine Verschiebung in einer Achsrichtung ist ein einfaches Wegbewegen realisierbar. Dabei kann die Achse gleichzeitig die Achsrichtung für die Verschiebung definieren. Ebenso ist es aber auch denkbar, dass die Verschiebung entlang einer Achsrichtung erfolgt, welche in einem Winkel zur Achse der Schwenkbewegung verläuft. Wenn die Schwenkachse horizontal verläuft, kann wenigstens die Bewegung der Haltemittel in die eine Richtung aufgrund ihrer Schwerkraft erfolgen.

Die Haltemittel können löffelförmig ausgestaltet sein. Dabei wird unter löffelförmig verstanden, dass die Haltemittel auf der in bestimmungsgemässen Gebrauch einer Kapsel zugeordneten Seite konkav ausgestaltet sind, um die Kapsel wenigstens teilweise umgreifen und/oder untergreifen zu können. Somit kann bereits mit einem geringen Eingriff die Kapsel erfasst und in der entsprechenden Zwischenposition gehalten werden. Es versteht sich von selbst, dass die konkave Ausgestaltung der Haltemittel an die Form der zu verwendenden Kapsel angepasst sein muss.

Üblicherweise werden herkömmliche Kapseln von Haltemitteln an einem umlaufenden Flansch erfasst. Entgegen diesem Erfassen an einem Flansch können die vorliegenden Haltemittel derart ausgestaltet sein, dass diese eine Kapsel ohne definierte Haltepunkte erfassen kann. Beispielsweise können dadurch Kapseln ohne einen Flansch vom Haltemittel in der Zwischenposition gehalten werden.

Denkbar sind insbesondere kugelförmige oder würfelförmige Kapseln. Ebenso können Kapseln mit einer beliebigen Polyederform oder auch zylinderförmige Kapseln vom Haltemittel erfasst werden. Kugelförmige, würfelförmige oder polyederförmige Kapseln haben den Vorteil, dass diese nicht ausgerichtet in der Zwischenposition gehalten werden müssen.

Die Haltemittel könne die Kapsel in der Zwischenposition seitlich umfassen. Dabei weisen die Haltemittel einen kleinsten Abstand voneinander auf, welcher maximal 90 % des Kapseldurchmessers gemessen im Bereich des Umfassens der Kapsel entspricht. Es wird somit sichergestellt, dass die Kapsel in der Zwischenposition festgehalten unter keinen Umständen zwischen den Haltemitteln hindurch gleiten kann und aus der Zwischenposition fallen kann. Dabei wir der Kapseldurchmesser im Bereich des Umfassens durch einen Schnitt durch die Kapsel quer zu einer Bewegungsrichtung der beiden Brühkammerhälften zueinander bestimmt. Die Haltemittel umfassen die Kapsel vorzugsweise in einem Bereich von wenigstens je 20°. Damit kann sichergestellt werden, dass die Kapsel sicher in der Zwischenposition festgehalten werden kann.

Die Haltemittel können auf der Achse mittels eines Federelementes gegeneinander vorgespannt sein. Durch diese Vorspannung der Federkraft kann festgelegt werden, mit welcher Kraft eine fälschlicherweise in die Zwischenposition eingelegte Kapsel bei Nichtbenutzung wieder aus der Zwischenposition entfernt werden kann. Beispielsweise kann es vorkommen, dass ein Benutzer fälschlicherweise eine Espresso-Kapsel einlegt, gerne aber einen langen Kaffee geniessen möchte. In herkömmlichen Brüheinheiten kann die eingelegte Kapsel nur durch Schliessen der Brühkammer und erneutes Öffnen aus der Brüheinheit entfernt werden. Der Benutzer kann somit nur die Espresso-Kapsel mit einer grösseren Menge Wasser zubereiten, einen Espresso anstelle eines langen Kaffees geniessen oder die Kapsel ohne Extraktion aber angestochen aus der Brüheinheit entfernen. Wenn die Haltemittel die Kapsel aber lediglich durch eine gegeneinander gerichtete geringe Vorspannung der Federkraft festhalten, kann die Kapsel einfach durch den Raum zwischen den Brühkammern hindurchgedrückt werden. Die Kapsel wird dabei nicht beschädigt oder aufgestochen und kann wiederverwendet werden.

Ein weiterer Aspekt der vorliegenden Offenbarung betrifft ein Verfahren zum Einlegen einer Kapsel in eine Brüheinheit einer Getränkezubereitungsmaschine. Dabei weist die Brüheinheit eine erste Brühkammerhälfte und eine zweite Brühkammerhälfte auf, welche relativ zueinander verschiebbar zum Ausbilden einer Brühkammer angeordnet sind. Die Brüheinheit weist wiederum wenigstens ein, vorzugsweise zwei Haltemittel zum Halten und Positionieren der Kapsel auf. Die Kapsel wird im Verfahren vom Haltermittel oder von den Haltemitteln in einer Zwischenposition zwischen den beiden Brühkammerhälften gehalten. Beim Zusammenfahren der Brühkammerhälften geben die Haltemittel die Kapsel frei, wobei die Kapsel von einer der beiden oder von beiden Brühkammerhälften erfasst und ausgerichtet wird. Die Brühkammerhälften fahren zusammen und bilden eine geschlossene Brühkammer. Die erste und zweite Brühkammerhälften sind vor dem Freigeben durch die Haltemittel derart beabstandet, dass die Brühkammerhälften die Kapsel nicht erfassen können, wenn diese von den Haltemitteln frühzeitig freigegeben wird. Die Kapsel würde bei einem frühzeitigen Freigeben zwischen den beiden Brühkammerhälften hindurchfallen

Die Kapsel kann somit vor dem Zusammenfahren der Brühkammerhälften frei in die Zwischenposition eingelegt werden. Eine fälschlicherweise eingelegte Kapsel, beispielsweise für die Zubereitung eines Espressos anstelle eines langen Kaffees, kann wieder aus der Zwischenposition entfernt werden. Hierzu müssen lediglich die Haltemittel überwunden werden, beispielsweise durch Auseinanderdrücken der Haltemittel.

Die Kapsel kann vor dem Freigeben durch die Haltemittel keinen mechanischen Kontakt mit der ersten und/oder der zweiten Brühkammerhälfte aufweisen.

Ein Entfernen einer fälschlicherweise eingelegten Kapsel aus der Zwischenposition kann somit erfolgen, ohne dass die Kapsel beschädigt wird. Entsprechend kann der Benutzer die so "wieder gewonnene" Kapsel später uneingeschränkt benutzen.

Beim Zusammenfahren der Brühkammerhälften können sich die Haltemittel auf einer Achse in Achsrichtung verschieben, so dass sich ein Abstand zwischen den Haltemitteln vergrössert. Eine axiale Verschiebung ist einfach zu realisieren und kann präzise gesteuert werden.

Die Haltemittel können sich entgegen einer Kraft eines Federelementes auf der Achse verschieben. Die Haltemittel sind somit gegeneinander vorgespannt, wobei ein definierter kleinster Abstand zwischen den Haltemitteln vorgesehen sein kann. Durch überwinden der Federkraft kann eine von den Haltemitteln in der Zwischenposition gehaltene Kapsel entnommen werden.

Beim Freigeben der Kapsel können sich die Haltemittel um eine Achse schwenken. Dabei kann die Achse dieselbe Achse sein, entlang welcher sich die Haltemittel verschieben. Alternativ kann es sich dabei auch um eine andere Achse handeln. Durch eine Schwenkbewegung der Haltemittel werden diese einfach aus dem Bereich zwischen den Brühkammerhälften entfernt, so dass die Brühkammer geschlossen werden kann. Die Schwenkbewegung kann dabei um eine horizontal angeordnete Achse nach oben oder nach unten erfolgen. Ebenso ist es denkbar, dass die Achse vertikal ausgerichtet ist und die Haltemittel seitwärts schwenken. Die Haltemittel können lediglich eine Schwenkbewegung oder lediglich einen Verschiebebewegung ausführen. Ebenso ist auch eine Kombination der Bewegungen möglich.

Beim Auseinanderfahren der Brühkammerhälften können die Haltemittel um die Achse wieder in die Position zwischen den Brühkammerhälften schwenken. Dabei kann eine an einer Brühkammerhälfte anhaftende Kapsel von der Brühkammerhälfte wegstossen werden. Vorzugsweise erfolgt ein solches Zurückschwenken nach unten, so dass die Kapsel aufgrund der Schwerkraft nach unten aus dem Bereich zwischen den Brühkammerhälften weggestossen wird. Der Zeitpunkt des Zurückschwenkens in die Position zwischen den Brühkammerhälften kann verzögert erfolgen, beispielsweise erst nachdem die Brühkammerhälften ihre offene Stellung erreicht haben.

Ein weiterer Aspekt der vorliegenden Offenbarung betrifft eine Getränkezubereitungsmaschine mit einer Brüheinheit wie vorgängig beschrieben.

Ein weiterer Aspekt der vorliegenden Offenbarung betrifft ein System zur Getränkezubereitung umfassend eine Kapsel und eine Brüheinheit wie vorgängig beschrieben.

Ein weiterer Aspekt der vorliegenden Offenbarung betrifft eine Brühkammerhälfte zum Ausbilden einer Brühkammer mit einer korrespondierenden zweiten Brühkammerhälfte einer Brüheinheit einer Getränkezubereitungsmaschine. Dabei weist die Brühkammerhälfte einen Einlass zum Einleiten einer Brühflüssigkeit zur Getränkezubereitung und/oder einen Auslass zum Ableiten eines zubereiteten Getränks auf. Des Weiteren weist die Brühkammerhälfte wenigstens einen weiteren Zugang für das Einleiten und/oder Ausleiten einer Spülflüssigkeit auf. Der weitere Zugang ist dabei vorzugsweise getrennt vom Einlass und vom Auslass. Bei einem einzigen weiteren Zugang dient dieser vorzugsweise dem Einleiten und Ausleiten der Spülflüssigkeit. Bei zwei oder mehreren weiteren Zugängen kann das Einleiten und das Ausleiten durch getrennte Zugänge erfolgen. Die Brüheinheit kann wie vorgängig beschrieben ausgestaltet sein.

Ein solcher weiterer Zugang der Brühkammerhälfte ermöglicht ein einfaches Reinigen und/oder Spülen der Brühkammer, ohne dass dabei der Einlass und/oder Auslass zur Zubereitung des Getränkes mit der Spülflüssigkeit in Kontakt tritt.

Der weitere Zugang kann ein Filterelement aufweisen. Durch die Verwendung eines Filterelementes kann verhindert werden, dass störende Partikel in die Brühkammer geschwemmt werden und dort später die Getränkezubereitung negativ beeinflussen. Ebenso wird auch verhindert, dass grössere Bestandteile der Getränkezubereitung, wie beispielsweise Kaffeepartikel, durch den weiteren Zugang ausgespült werden und allfällig nachgeschaltete Ventile beschädigen, verstopfen oder blockieren.

Die Brühkammerhälfte kann einen Auswerfer zum Auswerfen der Kapsel aufweisen, welcher relativ beweglich zur Brühkammerhälfte ausgebildet ist. Somit kann nach der Getränkezubereitung und nach dem Öffnen der Brühkammer eine allfällig an einer Brühkammerhälfte anhaftende Kapsel ausgestossen werden. Ein solcher Auswerfer ist vor allem dann hilfreich, wenn die Kapsel mittels an der Brühkammerhälfte angebrachter Perforationsmittel angestochen wird. Herkömmliche Kapseln mit Flansch können am Flansch gefasst und vom Perforationsmittel getrennt werden. Bei Kapseln ohne stabilem oder ganz ohne Flansch bleibt eine angestochene gerne Kapsel auf den Perforationsmitteln haften und kann dann mithilfe des Auswerfers von diesen wegbewegt oder abgestreift werden. Auch bei Kapseln mit einer Hülle, beispielsweise aus Cellulose oder Alginaten, ist ein Auswerfer zum Trennen der Kapsel von der Brühkammerhälfte oder dem Perforationsmittel hilfreich.

Der weitere Zugang kann zwischen dem Auswerfer und der Brühkammerhälfte ausgebildet sein bzw. dazwischen münden. Durch die Bewegung des Auswerfers relativ zur Brühkammerhälfte erfolgt eine stete Selbstreinigung des weiteren Zugangs.

Das Filterelement kann als Spalt, vorzugsweise als Ringspalt, zwischen dem Auswerfer und der Brühkammerhälfte ausgebildet sein. Dabei ist der Spalt vorzugsweise derart dimensioniert, dass keine Getränkesubstanz in den Spalt eindringen kann. Die vorab erwähnte Bewegung zwischen Auswerfer und Brühkammerhälfte verhindert aktiv, dass sich Partikel der Getränkesubstanz im Spalt verklemmen.

Der Spalt kann eine typische Breite von 200 µm aufweisen, insbesondere liegt die Breite des Spaltes zwischen 50 µm und 500 µm, bevorzugt zwischen 100 µm und 350 µm, besonders bevorzugt zwischen 150 µm und 250 µm. Diese Dimensionierung verhindert insbesondere das Eindringen von Kaffeepartikeln, welche bei der Extraktion einer Kaffeekapsel entstehen können.

Die Brühkammerhälfte kann Perforationsmittel zum Perforieren einer Einlassseite oder einer Auslassseite einer Kapsel aufweisen. Die Perforationsmittel dienen dem Einstechen der Kapselhülle, so dass ein Extraktionsfluid in die Kapsel eingeleitet oder daraus ausgeleitet werden kann. Die Perforationsmittel sind vorzugsweise relativ beweglich zur Brühkammerhälfte angeordnet. Durch die bewegliche Anordnung der Perforationsmittel kann der Zeitpunkt des Aufstechens einer Kapsel bewusst unabhängig vom Schliessen der Brühkammer gesteuert werden. So ist es beispielsweise möglich, die Perforationsmittel auf der Auslassseite der Kapsel derart anzuordnen, dass diese nicht in die Brühkammer vorstehen. Beispielsweise können die Perforationsmittel auslassseitig vom Auswerfer überdeckt werden. Entsprechend kann in einem ersten Extraktionsschritt erst die Kapsel auf der Einlassseite angestochen werden, so dass das zu extrahierende Getränkesubstrat benetzt wird. Erst in einem nachfolgenden Schritt wird die Kapsel ausgangsseitig geöffnet, angestochen oder perforiert. In der Kapsel kann somit vor der eigentlichen Extraktion erst ein Druck aufgebaut werden. Beispielsweise wird so ein Vorbrühen einer Kaffeesubstanz möglich, bevor das Kaffeegetränk zubereitet wird. Ebenso ist es jedoch denkbar, dass die Perforationsmittel die Kapsel eingangsseitig und ausgangsseitig gleichzeitig aufstechen. Die Perforationsmittel liegen dann frei und werden nicht von einem Auswerfer überdeckt.

Der Auswerfer kann relativ beweglich zum Perforationsmittel angeordnet sein. Somit wird auch bei einem gegenüber der Brühkammerhälfte beweglichen Perforationsmittel ein Abstreifen der Kapsel vom Perforationsmittel möglich.

Die Brühkammerhälfte kann in etwa mittig wenigstens eine Nut aufweisen, welche vom Auswerfer in Richtung zur korrespondierenden zweiten Brühkammerhälfte verläuft. Eine solche Nut erleichtert das Ablösen der Kapsel von der Oberfläche der Brühkammer oder von den entsprechenden Perforationsmitteln. Ein durch das Zurückziehen der Perforationsmittel oder einer Injektorplatte sowie allenfalls durch das Öffnen der Brühkammer erzeugtes Vakuum zwischen der Wand der Brühkammer und der Kapsel kann somit gezielt verhindert werden. Es wird keine Getränkesubstanz durch die von den Perforationsmitteln erzeugten Öffnungen aus der Kapsel gezogen, welche die Brühkammer verschmutzen könnte. Diese Nut kann während der Extraktion allfälliges Restwasser aufnehmen, so dass das Restwasser die Kapsel im Bereich der Nut abstützt.

Die Nut kann dabei eine Breite zwischen 0.2 mm bis 3.0 mm, vorzugsweise von 1.0 mm, und eine Tiefe zwischen 0.2 mm bis 3.0 mm, vorzugsweise von 1.0 mm, aufweisen. Diese Dimensionen haben sich als optimal bei der Trennung zwischen Kapsel und Brühkammer erwiesen, ohne dass dabei das Verhalten der Kapsel in der Brühkammer während der Extraktion negativ beeinflusst wird.

Ein weiterer Aspekt der vorliegenden Offenbarung betrifft eine Brüheinheit einer Getränkezubereitungsmaschine. Die Brüheinheit weist zwei korrespondierende Brühkammerhälften auf. Die Brühkammerhälften sind relativ zueinander beweglich angeordnet, um von einer offenen Stellung zum Ausbringen und Einlegen einer Kapsel in eine geschlossene Stellung zum Ausbilden einer Brühkammer und zum Einschliessen und Extrahieren der Kapsel gebracht zu werden. Dabei weist wenigstens eine der Brühkammerhälften einen Einlass zum Einleiten einer Brühflüssigkeit zur Getränkezubereitung und wenigstens eine Brühkammerhälfte einen Auslass zum Ableiten eines zubereiteten Getränks auf. Ausserdem weist wenigstens eine Brühkammerhälfte wenigstens einen weiteren Zugang für das Einleiten und/oder Ausleiten einer Spülflüssigkeit auf. Die Brüheinheit kann wie vorgängig beschrieben ausgestaltet sein.

Ein solcher weiterer Zugang in einer Brühkammerhälfte ermöglicht ein einfaches Reinigen und/oder Spülen der Brühkammer, ohne dass dabei Spülflüssigkeit in den Einlass und/oder den Auslass gelangt. Dabei können Einlass und Auslass in derselben Brühkammerhälfte angeordnet sein oder an unterschiedlichen Brühkammerhälften. Ebenso kann der weitere Zugang an einer Brühkammerhälfte zusammen mit dem Einlass oder dem Auslass angeordnet sein, oder der weitere Zugang befindet sich zusammen mit dem Einlass und Auslass in derselben Brühkammerhälfte. Ausserdem kann der weitere Zugang in der einen Brühkammerhälfte angeordnet sein, während sich Einlass und Auslass in der anderen Brühkammerhälfte befinden. Bei mehreren weiteren Zugängen können diese in beiden Brühkammerhälften angeordnet sein.

Wenigstens eine der Brühkammerhälften kann Perforationsmittel zum Perforieren einer Einlassseite oder einer Auslassseite der Kapsel und einen Auswerfer zu Auswerfen und Abstreifen der Kapsel von den Perforationsmitteln aufweisen. Dabei ist der Auswerfer relativ beweglich zur Brühkammerhälfte und/oder zu den Perforationsmitteln angeordnet. In der offenen Stellung überdeckt der Auswerfer die Perforationsmittel derart, dass diese höchstens unwesentlich vorstehen. Dabei wird unter "höchstens unwesentlich vorstehen" hier und im Folgenden verstanden, dass die Perforationsmittel eine Kapsel beim Einlegen und/oder Auswerfen aus der Brühkammer nicht behindern oder beschädigen.

Ein weiterer Aspekt der vorliegenden Offenbarung betrifft ein Verfahren zum Auswerfen einer Kapsel aus einer Brüheinheit, wie vorgängig beschrieben, einer Getränkezubereitungsmaschine. Beim relativen Bewegen der Brühkammerhälften von der geschlossenen Stellung zum Ausbilden einer Brühkammer und zum Einschliessen und Extrahieren der Kapsel in die offene Stellung zum Ausbringen und Einlegen der Kapsel werden sich in einem ersten Schritt die Brühkammerhälften voneinander wegbewegen. In einem wenigstens teilweise gleichzeitigen oder nachfolgenden weiteren Schritt bewegen sich die Perforationsmittel derart relativ zum Auswerfer, bis diese höchstens unwesentlich vorstehen oder gar nicht mehr vorstehen. Durch die Relativbewegung zwischen Auswerfer und Perforationsmittel erst bei geöffneter Brühkammer kann festgelegt werden, in welcher der Brühkammerhälfte die Kapsel verbleibt und erst nachfolgend gelöst wird. Zusätzlich kann das Perforationsmittel derart ausgestaltet werden, dass die Kapsel bewusst auf dem Perforationsmittel stecken bleibt. Beispielsweise können Widerhacken vorgesehen werden oder Perforationsmittel weisen einen gegenüber der Spitze verdünnten Hals auf. Entsprechend muss das Ablösen von diesem Perforationsmittel bewusst, beispielsweise vom Auswerfer, unterstützt werden.

Der Auswerfer kann sich relativ zur Brühkammerhälfte derart bewegen, so dass dieser aus einer Oberfläche der Brühkammerhälfte vorsteht. Dies hat den Vorteil, dass sich die Kapsel nicht nur vom Perforationsmittel löst, sondern gleichzeitig auch von der Brühkammerhälfte abgelöst und weggeschoben wird.

Der Auswerfer kann sich relativ zur Brühkammerhälfte erst dann bewegen, wenn sich die Brühkammerhälften bereits in der offenen Stellung befinden oder unmittelbar kurz vor Erreichen der offenen Stellung. Somit kann die Kapsel direkt aus dem Bereich zwischen den Brühkammerhälften austreten, ohne dass es zu einem weiteren Kontakt mit den Brühkammerhälften kommt. Ein erneutes Festsetzen der Kapsel oder eine Verschmutzung der Brühkammerhälften wird ausgeschlossen.

Der Auswerfer kann sich derart relativ zur Brühkammerhälfte bewegen, dass dieser nicht aus der Brühkammerhälfte vorsteht. Eine frische Kapsel kann somit ungehindert eingeführt werden.

Ein weiterer Aspekt der vorliegenden Offenbarung betrifft eine Getränkezubereitungsmaschine mit einer Brüheinheit wie vorgängig beschrieben.

Ein weiterer Aspekt der vorliegenden Offenbarung betrifft ein System zur Getränkezubereitung umfassend eine Kapsel und eine Brüheinheit wie vorgängig beschrieben.

Ein weiterer Aspekt der vorliegenden Offenbarung betrifft eine Getränkezubereitungsmaschine umfassend eine Brüheinheit, insbesondere wie vorgängig beschrieben, eine Pumpe, eine erste und eine zweite Fluidleitung sowie eine Steuerung. Die Brüheinheit weist zwei korrespondierende Brühkammerhälften auf, welche relativ zueinander beweglich angeordnet sind. Die Brühkammerhälften können von einer offenen Stellung zum Ausbringen und Einlegen einer Kapsel in eine geschlossene Stellung zum Ausbilden einer Brühkammer und zum Einschliessen und Extrahieren der Kapsel gebracht werden. Dabei weist die Brühkammer einen Einlass zum Einbringen einer Extraktionsflüssigkeit, einen Auslass zum Ausbringen des zubereiteten Getränks und wenigstens einen weiteren Zugang zum Spülen der Brühkammer auf. Der weitere Zugang ist dabei getrennt vom Einlass und vom Auslass. Die Pumpe dient zum Fördern der Extraktions- oder Spülflüssigkeit. Die erste Fluidleitung ist zwischen der Pumpe und dem Einlass angeordnet und weist ein erstes Ventil zum Öffnen und Schliessen der ersten Fluidleitung auf. Die zweite Fluidleitung ist zwischen der Pumpe und dem wenigstens einen weiteren Zugang angeordnet und mit einem zweiten Ventil zum Öffnen und Schliessen der zweiten Fluidleitung versehen. Mit der Steuerung ist wenigstens eines der Ventile und/oder die Pumpe ansteuerbar.

Der weitere Zugang der Brühkammer ermöglicht ein einfaches Reinigen und/oder Spülen der Brühkammer, ohne dass dabei die Spülflüssigkeit durch den Einlass und/oder Auslass in die Brühkammer zugeführt und/oder aus der Brühkammer abgeführt werden.

Die Getränkezubereitungsmaschine kann eine dritte Fluidleitung zwischen dem wenigstens einen weiteren Zugang und einem Auffangbehälter mit einem dritten Ventil zum Öffnen und Schliessen der dritten Fluidleitung umfassen. Eine solche dritte Fluidleitung mit dem entsprechenden Ventil erlaubt das Ausbringen der Spülflüssigkeit aus der Brühkammer in den Auffangbehälter. Somit muss die Spülflüssigkeit nicht über den Auslass der Brühkammer abfliessen.

Das erste und/oder zweite und/oder dritte Ventil kann aktiv von der Steuerung angesteuert werden. Denkbar sind hierzu Magnetventile oder Motorventile. Somit kann beispielsweise beim Befüllen der Brühkammer mit einer Spülflüssigkeit das zweite Ventil geöffnet werden, während das dritte Ventil geschlossen bleibt. Nach einer Einwirkungszeit kann dann das zweite Ventil geschlossen und das dritte Ventil zum Ableiten der Spülflüssigkeit geöffnet werden.

Das erste Ventil kann als selbstöffnendes Druckventil ausgestaltet sein. Damit kann sichergestellt werden, dass keine Spülflüssigkeit in die erste Fluidleitung und in eine in der Brühkammer eingelegte Kapsel gelangt. Die Spülflüssigkeit kann somit unter Druck über den wenigstens einen weiteren Zugang in die Brühkammer eingespritzt werden, solange der Druck dabei unter dem zum Öffnen des ersten Ventils benötigten Druck bleibt.

Das erste Ventil kann eine Hysterese aufweisen und insbesondere bei einem Druck zwischen 3 bar bis 14 bar, bevorzugt zwischen 5 bar bis 12 bar, besonders bevorzugt zwischen 7 bar bis 9 bar, öffnen und insbesondere bei einem Druck zwischen 0.5 bar bis 5.0 bar, bevorzug bei 2 bar, schliessen. Dabei sollte ein Druckgefälle zwischen dem Öffnungsdruck dem Schliessdruck von wenigsten 1 bar vorhanden sein. Eine solche Hysterese stellt sicher, dass die Extraktion erst ab einem bestimmten Druck beginnt und bei einem geringen Druck wieder eingestellt wird. Ein Nachtropfen der Extraktionsflüssigkeit in die Brühkammer kann vermieden werden. Eine solche Hysterese kann selbstverständlich auch über die Steuerung bei einem angesteuerten ersten Ventil ausgebildet werden. Ein angesteuertes Ventil erlaubt die Festlegung eines Schaltzeitpunktes unabhängig von einem anliegenden Druck. Der Prozessablauf kann somit frei gestaltet werden. Ausserdem sind dadurch auch definierte Zwischenstellungen realisierbar.

Die Getränkezubereitungsmaschine kann ein viertes Ventil zum Öffnen und Schliessen eines Getränkeauslasses aufweisen. Dabei wird unter dem Getränkeauslass eine Fluidleitung verstanden, welche sich vom Auslass der Brühkammer bis zu einer Abgabeöffnung der Getränkezubereitungsmaschine erstreckt. Beispielsweise kann es sich beim vierten Ventil um ein selbstöffnendes Druckventil handeln, welches insbesondere bei einem Druck zwischen 1 bar bis 12 bar, bevorzugt zwischen 3 bar bis 10 bar, besonders bevorzugt zwischen 6 bar bis 9 bar, öffnet. Ein solches Ventil erlaubt eine Getränkeextraktion lediglich ab einem voreingestellten Druck. Für die Zubereitung beispielsweise eines Kaffees ist es wichtig, dass die Extraktion unter einem gewissen Druck erfolgt. Ansonsten wird der Kaffee merkliche Qualitätseinbussen aufweisen. Ausserdem wird verhindert, dass allfällige Spülflüssigkeit aus dem Getränkeauslass zur Ausgabeöffnung und somit in einen von einem Benutzer bereitgestellten Becher fliessen kann. Ebenso wird mit diesem Ventil ermöglicht, dass ein in der Brühkammer eingeschlossenes Luftvolumen komprimiert wird, um die geschlossene Brühkammer überhaupt mit der Spülflüssigkeit befüllen und wieder entleeren zu können. Das Vierte Ventil kann ebenfalls ein von der Steuerung aktiv angesteuertes Ventil sein.

Die Getränkezubereitungsmaschine kann einen hydraulischen Anpresskolben mit einer Injektorplatte umfassen, wobei die Injektorplatte Teil einer Brühkammerhälfte ist. Dieser Anpresskolben ist zwischen der Pumpe und dem ersten Ventil derart angeordnet, dass der Anpresskolben die Injektorplatte und somit einen Teil einer Brühkammerhälfte bewegt. Dabei wird das Volumen der Brühkammer vor dem Öffnen des ersten Ventils reduziert. Eine in der Brühkammer eingeschlossene Kapsel wird deformiert. Insbesondere bei einer Kapsel, welche einen Pressling umfasst, ist eine Deformation der Kapsel nötig, um die im Pressling verdichtete Getränkesubstanz aufbrechen zu können. Nur so kann eine gleichmässige Extraktion der Getränkesubstanz erfolgen. Die hydraulische Kraft des Anpresskolbens kann bestimmt werden durch den Wirkdurchmesser des Anpresskolbens sowie durch den benötigten Druck, welcher zum Öffnen des ersten Ventils benötigt wird. Die Form und die Bewegung der Injektorplatte können so auf eine in der Brühkammer aufgenommene Kapsel abgestimmt sein, dass ein Aufbrechen des Getränkesubstrates der Kapsel erreicht wird. Dabei können in einen Teil einer Hülle oder eines Oberflächenmaterials der Kapsel ein Rissgefüge oder sonstige, beispielsweise Perforationen, eingebracht werden. Gleichzeitig oder alternativ kann die Injektorplatte auch zum Verdichten des Getränkesubstrates dienen, so dass dieses eine für die Extraktion geeignete gleichmässige Dichte aufweist.

Der Anpresskolben kann einen Anpressdruck der beiden Brühkammerhälften gegeneinander verstärken. Entsprechend kann für das Verschliessen der Brühkammer bei gleichbleibender Dichtwirkung eine geringere Kraft aufgewendet werden. Die Bewegung der Brühkammerhälften wird erheblich entlastet.

Ein weiterer Aspekt der vorliegenden Offenbarung betrifft ein Verfahren zur Zubereitung eines Getränks mit einer Getränkezubereitungsmaschine, insbesondere wie vorgängig beschrieben, umfassend die Schritte:
a) Einlegen einer Kapsel in die Brühkammer,
b) Verschliessen der Brühkammer,
c) Befüllen der Brühkammer mit einer Spülflüssigkeit durch einen weiteren Zugang,
d) Ableiten der Spülflüssigkeit aus der Brühkammer zu einem Auffangbehälter,
e) Einleiten einer Extraktionsflüssigkeit durch einen Einlass, welcher unterschiedlich zum weiteren Zugang ist, in die Brühkammer, sodass diese in die Kapsel strömt.

Durch ein solches Verfahren kann eine Kapsel in der Brühkammer benetzt werden, ohne dass die Spülflüssigkeit mit dem zubereiteten Getränk in Kontakt kommt. Beispielsweise kann dadurch eine Kapselhülle, welche insbesondere hygroskopisch ist, benetzt werden. Allenfalls können dadurch die physikalischen Eigenschaften der Kapselhülle beeinflusst werden. Beispielsweise kann die Kapsel durch den Kontakt mit der Spülflüssigkeit leichter perforiert werden. Ebenso ist es denkbar, dass insbesondere bei einem Spülen mit einer insbesondere heissen Spülflüssigkeit die Elastizität oder Dehnbarkeit der Kapselhülle vergrössert werden.

Die Schritte c) und d) können einmal, zweimal, dreimal oder mehrmals wiederholt werden. Je nach Material der Kapselhülle und des zu erreichenden Effektes können mehrere Wiederholungen erfolgen.

Die Schritte d) und e) können wenigstens teilweise gleichzeitig erfolgen. Insbesondere bei einer flexiblen Kapselhülle wird ein Ableiten der Spülflüssigkeit aus der Brühkammer durch ein Aufweiten des Volumens der Kapsel beim Einspritzen der Extraktionsflüssigkeit in die Kapsel unterstützt.

Vor dem Einleiten der Extraktionsflüssigkeit in die Kapsel kann die Grösse der Brühkammer verringert und die Kapsel deformiert werden. Hierzu ist es vorteilhaft, wenn die Kapselhülle flexibel und dehnbar ausgestaltet ist, so dass die Hülle nicht aufbricht und die Getränkesubstanz nicht freigegeben wird. Insbesondere wenn die Kapsel einen Pressling umfasst, kann durch die Verringerung des Volumens der Brühkammer der Pressling aufgebrochen werden, sodass anschliessend eine gleichmässige Extraktion erfolgen kann. Die Grösse und Form der Brühkammer können so auf eine in der Brühkammer aufgenommene Kapsel abgestimmt sein, dass ein Aufbrechen des Getränkesubstrates der Kapsel erreicht wird. Dabei können in einen Teil einer Hülle oder eines Oberflächenmaterials der Kapsel ein Rissgefüge oder sonstige, beispielsweise Perforationen, eingebracht werden. Gleichzeitig oder alternativ kann die Verringerung des Brühkammervolumens auch zum Verdichten des Getränkesubstrates dienen, so dass dieses eine für die Extraktion geeignete gleichmässige Dichte aufweist.

Während dem Einleiten der Extraktionsflüssigkeit durch den Einlass in die Kapsel kann sich das Volumen der Kapsel ausdehnen. Zwar kann sich bereits durch das Verringern der Grösse der Brühkammer die Kapsel an deren Volumen anpassen. Beim Einleiten der Extraktionsflüssigkeit wird dieses Anpassen des Kapselvolumens an das Volumen der Brühkammer aber nochmals verstärkt. Die Kapsel wird durch den im Innern der Kapsel herrschenden Druck an die Wand der Brühkammer gepresst.

Ein weiterer Aspekt der vorliegenden Offenbarung betrifft ein System zur Getränkezubereitung umfassend eine Kapsel und eine Getränkezubereitungsmaschine wie vorgängig beschrieben.

Ein weiterer Aspekt der vorliegenden Offenbarung betrifft eine Brüheinheit, insbesondere wie vorgängig beschrieben, einer Getränkezubereitungsmaschine mit einer Brühkammer und einer Brühkammeroberfläche. Die Brühkammer ist im Wesentlichen rotationssymmetrisch bezüglich einer von einer ersten Brühkammerhälfte zu einer zweiten Brühkammerhälfte gerichteten Achse ausgebildet. Die Brühkammer weist in Richtung der Achse eine maximale axiale Ausdehnung auf, welche kleiner ist als der grösste Durchmesser der Brühkammer quer zur Achse. Dabei weist die Brühkammer im Bereich der Achse eine Dicke auf, welche gleich oder geringer ist als die axiale Ausdehnung.

Eine solche Form der Brühkammer hat sich als vorteilhaft für die gleichmässige Extraktion einer Getränkesubstanz erwiesen.

Unter der Brühkammeroberfläche wird hier und im Folgenden die äussere Oberfläche des von der Brühkammer umschlossenen Raumes verstanden, wobei Aussparungen für Penetrationsmittel zum Aufstechen der Kapsel oder geringe Vertiefungen oder Rinnen mit einer Breite von bis zu 3 mm ausgeblendet werden.

Die Brühkammer kann beidseits im Bereich der Achse eine verringerte Dicke aufweisen. Durch die beidseitige Ausgestaltung einer verringerten Dicke wird die Extraktionsqualität nochmals verbessert.

Eine hier offenbarte Brüheinheit einer Getränkezubereitungsmaschine mit einer Brühkammer und einer Brühkammeroberfläche, insbesondere wie vorgängig beschreiben, ist im Wesentlichen rotationssymmetrisch bezüglich einer von einer ersten Brühkammerhälfte zur einer zweiten Brühkammerhälfte gerichteten Achse ausgestaltet. Die Brühkammeroberfläche weist im Bereich der Achse wenigstens auf einer, bevorzugt auf beiden Seiten eine konkave Aussparung auf und ist im Bereich quer zur Achse konvex ausgebildet.

Durch die konkav-konvexe Ausgestaltung der Brühkammer erfolgt eine optimale Extraktion einer korrespondierend geformten Kapsel.

Die Brühkammeroberfläche kann eine stetige Krümmung aufweisen. Durch die Vermeidung von abrupten Richtungsänderungen und Kanten kann eine gleichmässige Extraktion gewährleistet werden. Ausserdem kann eine in der Brühkammer aufgenommene Kapsel gefahrlos deformiert und der Form der Brühkammer angepasst werden.

Die Brühkammeroberfläche kann einen minimalen Krümmungsradius von 3 mm aufweisen. Wiederum werden dadurch abrupte Richtungsänderungen und Kanten vermieden.

Weniger als 50 %, bevorzug weniger als 30 %, besonders bevorzug weniger als 20 %, der Brühkammeroberfläche kann als ebene Fläche ausgebildet sein. Zwar sind solche ebenen Flächen denkbar, jedoch soll eine möglichst "runde" Oberfläche erzielt werden, so dass die Extraktion optimal erfolgen kann. Selbstverständlich kann eine "runde" Oberfläche auch aus einer Vielzahl von Polygonen erzielt werden. Hierbei wäre jedoch ein minimaler Winkel zwischen zwei sich berührenden Polygonflächen von 150°, bevorzugt 160°, besonders bevorzugt von 170°, einzuhalten.

Die Brüheinheit kann zwei korrespondierenden Brühkammerhälften aufweisen, welche relativ zueinander beweglich angeordnet sind, um von einer offenen Stellung zum Ausbringen und Einlegen einer Kapsel in eine geschlossene Stellung zum Ausbilden der Brühkammer und zum Einschliessen und Extrahieren der Kapsel gebracht zu werden. Dabei kann sowohl die erste als auch die zweite Brühkammer beweglich angeordnet sein. Ebenso ist es denkbar, dass beide Brühkammerhälften beweglich angeordnet sind.

Die Brühkammer kann in Richtung der Achse eine maximale axiale Ausdehnung im Bereich zwischen 15 mm bis 42 mm, vorzugsweise zwischen 18 mm bis 32 mm, besonders bevorzugt zwischen 20 mm bis 26 mm aufweisen. Typischerweise beträgt die maximale Ausdehnung 22 mm.

Die Brühkammer kann einen grössten Durchmesser der Brühkammer quer zur Achse im Bereich zwischen 25 mm bis 65 mm, vorzugsweise zwischen 28 mm bis 50 mm, besonders bevorzugt zwischen 30 mm bis 35 mm aufweisen. Typischerweise beträgt der grösste Durchmesser 32 mm.

Die Brühkammer kann im Bereich der Achse eine verringerte Dicke im Bereich zwischen 12 mm bis 40 mm, vorzugsweise zwischen 14 mm bis 32 mm, besonders bevorzugt zwischen 15 mm bis 20 mm aufweisen. Typischerweise beträgt die verringerte Dicke 17 mm.

Diese Dimensionen können auch variieren. Dabei hat es sich jedoch gezeigt, dass für eine optimale Extraktion eine axiale Ausdehnung geringer sein soll als ein grösster Durchmesser und eine Dicke kleiner als die axiale Ausdehnung sein soll.

Ein weiterer Aspekt der vorliegenden Offenbarung betrifft eine Getränkezubereitungsmaschine mit einer Brüheinheit wie vorgängig beschrieben.

Ein weiterer Aspekt der vorliegenden Offenbarung betrifft ein System zur Getränkezubereitung umfassend eine Kapsel und eine Brüheinheit wie vorgängig beschrieben.

Anhand von Figuren, welche lediglich Ausführungsbeispiele darstellen, wird die offenbarte Erfindung im Folgenden näher erläutert. Es zeigen:
- Figur 1:: eine perspektivische Ansicht auf eine Brüheinheit mit geschlossener Brühkammer von schräg oben,
- Figur 2:: einen Schnitt durch Brüheinheit gemäss Figur 1,
- Figur 3:: eine perspektivische Ansicht auf eine Brüheinheit mit offener Brühkammer von schräg oben,
- Figur 4:: einen Schnitt durch die Brühkammer gemäss Figur 3,
- Figur 5:: eine schematische Darstellung einer Kapsel in einer Zwischenposition,
- Figur 6:: die Brüheinheit der Figur 4 in einem Längsschnitt, wobei die Brühkammer nicht mehr ganz offensteht,
- Figur 7:: die Brüheinheit der Figur 4 in einem Längsschnitt, wobei die Brühkammer geschlossen ist,
- Figur 8:: eine perspektivische Ansicht auf eine Brühkammerhälfte mit Auswerfer und Perforationsmittel,
- Figur 9:: eine Darstellung des Hydraulikschemas der Brüheinheit,
- Figur 10:: einen Schnitt durch die geschlossene Brühkammer der Brüheinheit.

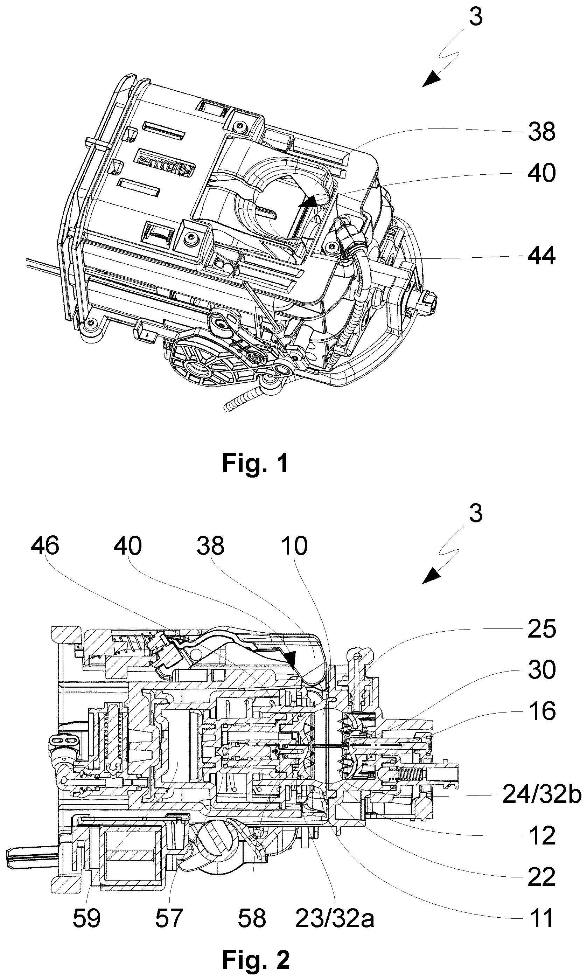

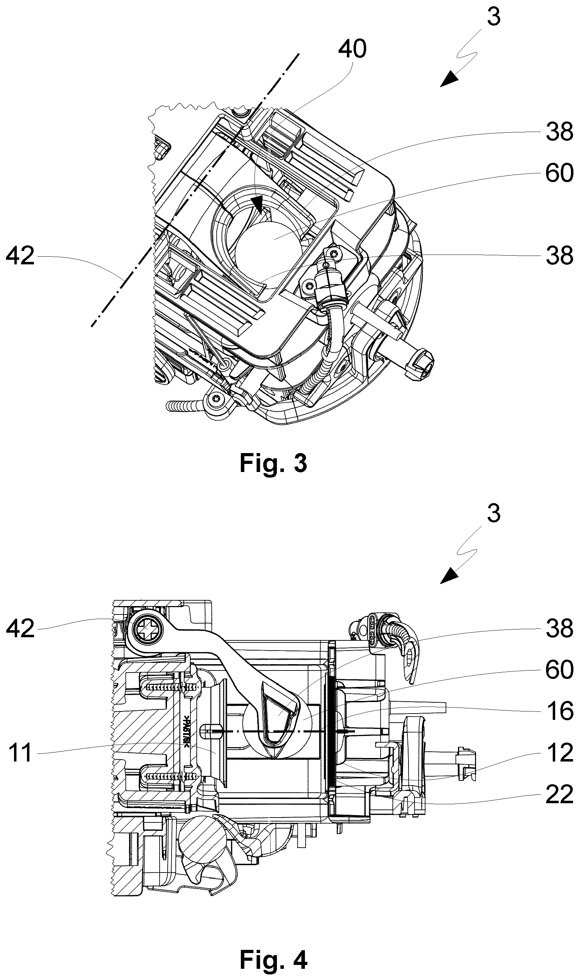

Die Figur 1 zeigt in einer perspektivischen Ansicht eine Ausführungsform einer Brüheinheit 3 für eine Getränkezubereitungsmaschine, wobei die Brühkammer der Brüheinheit 3 geschlossen ist. Erkennbar ist auf der Oberseite der Brüheinheit 3 ein Einwurfschacht 40, welcher beidseits durch je ein Haltemittel 38 begrenzt wird. In diesen Einwurfschacht 40 kann bei geöffneter Brühkammer eine Kapsel 60 (siehe Figur 3) in die Brühkammer 3 eingelegt werden.

In der Figur 2 ist die Brüheinheit 3 aus Figur 1 in einem Längsschnitt dargestellt. Wiederum erkennbar ist der Einwurfschacht 40 sowie ein Haltemittel 38, welches den Einwurfschacht 40 seitlich begrenzt. Unterhalb des Einwurfschachtes 40 ist eine Brühkammer 10 angeordnet, welche in der dargestellten Abbildung geschlossen ist. Die Brühkammer 10 umfasst eine erste Brühkammer 11 und zweite Brühkammerhälfte 12, welche relativ zueinander von einer offenen Stellung, in der die Kapsel 60 (siehe Figur 3) zwischen die Brühkammerhälften 11 und 12 einführbar ist, zu der dargestellten geschlossenen Stellung bewegbar sind. Dabei ist es irrelevant, welche der beiden Brühkammerhälften 11, 12 sich bewegt. Ebenso können beide Brühkammerhälften 11, 12 beweglich ausgestaltet sein. Die Bewegung der Brühkammerhälften 11, 12 relativ zueinander definieren eine Achse 16, welche von der ersten Brühkammer 11 zur zweite Brühkammer 12 gerichtet ist.

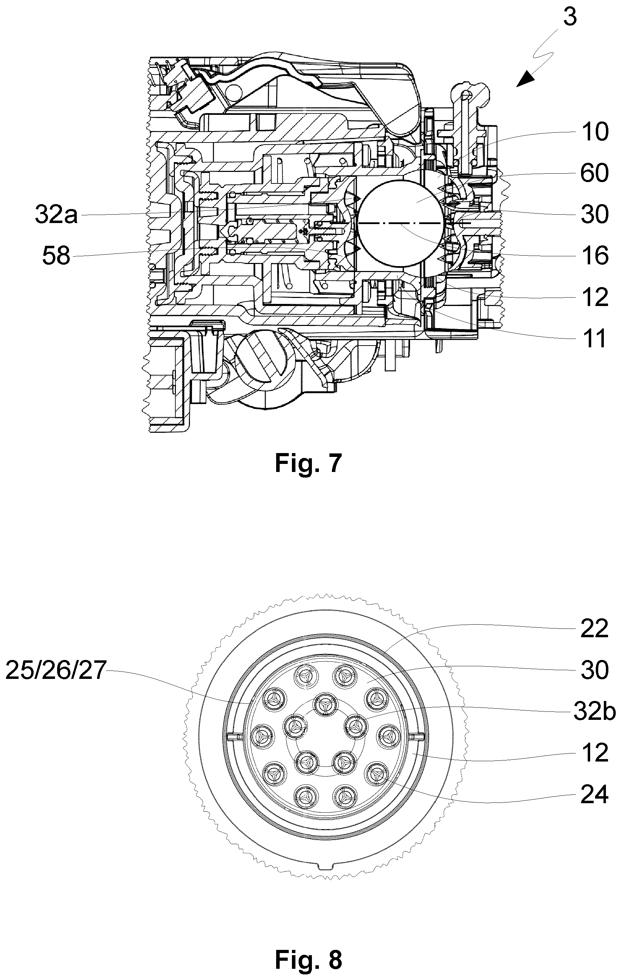

Die Brühkammer 10 weist in der ersten Brühkammerhälfte 11 einen Einlass 23 auf, um eine Extraktionsflüssigkeit in die Brühkammer 10 und in die Kapsel 60 (siehe Figur 3) einbringen zu können. Der Einlass 23 mündet in den Spitzen einzelner Perforationsmittel 32a einer Injektorplatte 58. Ausserdem weist die Brühkammer 10 in der zweiten Brühkammerhälfte 12 einen Auslass 24 auf, um ein zubereitetes Getränk aus der Brühkammer 10 abführen zu können. Der Auslass 24 wird in der zweiten Brühkammerhälfte 12 durch Öffnungen zu den hohlen Perforationsmitteln 32b gebildet. In die Brühkammer 10 mündet ein weiterer Zugang 25, durch welchen eine Spülflüssigkeit in die Brühkammer 10 eingebracht und aus dieser wieder abgeführt werden kann. Dieser weitere Zugang 25 wird zwischen dem Auswerfer 30 und dem festen Teil der zweiten Brühkammerhälfte 12 als Ringspalt 27 (siehe Figur 8) gebildet. Der Ringspalt 27 ist so dimensioniert, dass dieser als Filterelement 26 (siehe Figur 8) dient, um ein Ausspülen von Rückständen aus der Brühkammer 10 durch den weiteren Zugang 25 verhindert. Der Ringspalt weist dabei eine Breite von 200 µm auf. Zwischen den beiden Brühkammerhälften 11 und 12 ist ein Dichtelement 22 angeordnet, welches ein dichtes Verschliessen der Brühkammer 10 begünstigt.

Die Figuren 3 und 4 zeigen die Brüheinheit 3 mit der Brühkammer 10 in der offenen Stellung, wobei eine kugelförmige Kapsel 60 in einer Zwischenposition zwischen den Brühkammerhälften 11 und 12 von den Haltemitteln 38 gehalten wird.

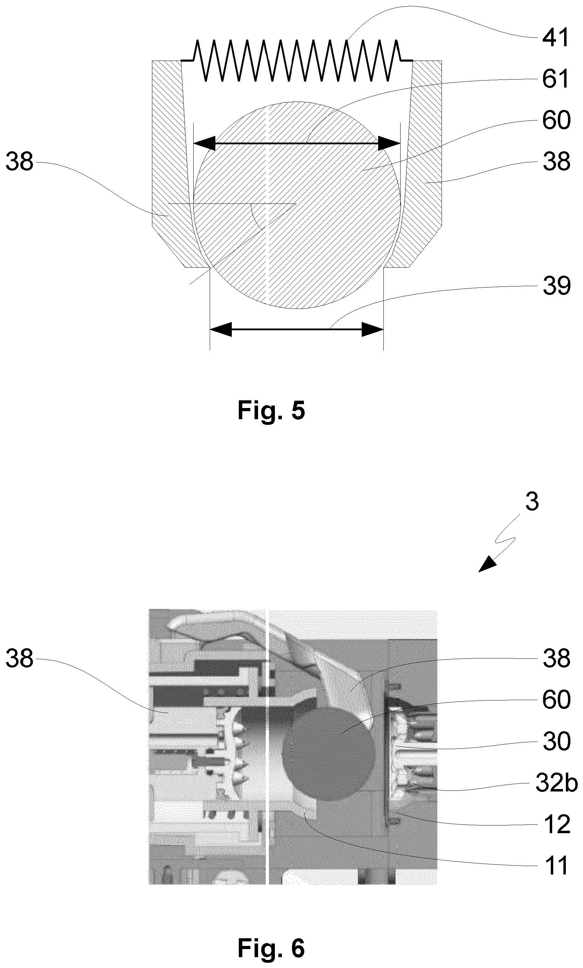

Die Figur 5 zeigt schematisch die beiden Haltemittel 38, welche die Kapsel 60 festhalten. In der Zwischenposition hat die Kapsel 60 keinen Kontakt mit den Brühkammerhälften 11 und 12 sondern liegt abgesehen von den Haltemitteln 38 frei in dieser Zwischenposition. Die Haltemittel 38 sind löffelförmig ausgebildet und umfassen die Kapsel 60 in einem Winkelbereich von je 28°. Entsprechend ist der kleinste Abstand 39 zwischen den Haltemitteln 38 um 16% kleiner als der Kapseldurchmesser 61. Somit kann die Kapsel 60 nicht zwischen den Haltemitteln 38 hindurchrutschen. Die Haltemittel 38 werden bei offener Brühkammer 10 von wenigstens einem Federelement 41 relativ gegeneinander vorgespannt, wie in Figur 5 schematisch dargestellt ersichtlich ist.

Sobald sich die Brühkammerhälften 11 und 12 relativ zueinander bewegen und sich nur noch in einem Abstand voneinander befinden, welcher geringer ist als die Abmessungen der Kapsel 60, im vorliegenden Fall einer kugelförmigen Kapsel also geringer als deren Durchmesser 61 (siehe Figur 5), werden die Haltemittel 38 relativ zueinander entgegen der Federkraft des Federelementes 41 auseinander bewegt, so dass die Kapsel 60 fallen gelassen wird. Diese Auseinanderbewegung der Haltemittel 38 wir durch ein Steuerungsmittel 44 (siehe Figur 1) bewirkt, welches sich keilförmig zwischen die Haltemittel 38 schiebt und so deren Abstand vergrössert. Die Haltemittel 38 können zusätzlich um eine Achse 42 schwenken, welche in den Figuren 3 und 4 dargestellt ist. Das Federelement 41 ist vorzugsweise ebenfalls auf dieser Achse 42 angeordnet, so dass die Federkraft entlang dieser Achse 42 wirkt. Durch die Schwenkbewegung werden die Haltemittel 38 komplett aus dem Bereich zwischen den Brühkammerhälften 11, 12 entfernt. Die zusammenfahrenden Brühkammerhälften 11 und 12 werden entsprechend nicht durch die Haltemittel 38 behindert. Gleichzeitig fangen die Brühkammerhälften 11 und 12 die Kapsel 60 auf (siehe Figur 6) und richten diese aus, so dass sie bei geschlossener Brühkammer 10 zwischen den beiden Brühkammerhälften 11 und 12 liegt (siehe Figur 7).

Während dem Zusammenfahren der Brühkammerhälften 11 und 12 ist die Injektorplatte 58 in der ersten Brühkammerhälfte 11 zurückversetzt, so dass die Kapsel 60 in genügend Spielraum zwischen den Brühkammerhälften 11 und 12 hat. Die Perforationsmittel 32b der zweiten Brühkammerhälfte 12 werden vom vorstehenden Auswerfer 30 überdeckt, so dass die Kapsel 60 von diesen in ihrer Bewegung nicht behindert wird.

Wie in Figur 7 ersichtlich, wird bei geschlossener Brühkammer 10 der Auswerfer 30 der zweiten Brühkammerhälfte 12 wieder zurückgezogen, so dass die Perforationsmittel 32b aus dem Auswerfer 30 vorstehen und die Kapsel 60 berühren. Die Injektorplatte 58 der ersten Brühkammerhälfte 11 ist noch immer zurückversetzt, die entsprechenden Einstechdorne der Injektorplatte 58 berühren die Kapsel 60 lediglich.

In Figur 8 zeigt in einer vergrösserten Darstellung auf die zweite Brühkammerhälfte 12 mit dem umlaufenden Dichtelement 22. Deutlich zu erkennen ist der Auswerfer 30, welcher in der Brühkammerhälfte 12 beweglich gelagert ist. Ebenso sind die Perforationsmittel 32b ersichtlich, welche aus dem Auswerfer 30 hervorstehen. Die Perforationsmittel 32b sind als Hohlkanüle ausgestaltet und weisen Eingangsöffnungen auf, welche den Auslass 24 der Brühkammer bilden. Zwischen dem Auswerfer 30 und der zweiten Brühkammerhälfte 12 ist ein Ringspalt 27 ausgebildet, welcher rund um den Auswerfer 30 verläuft. Dieser Ringspalt 27 bildet einerseits den weiteren Zugang 25 zur Brühkammer, um diese mit einer Spülflüssigkeit beaufschlagen zu können. Durch eine geeignete Dimensionierung des Spaltes 27 dient dieser auch als Filterelement 26, um ein unbeabsichtigtes Einbringen von Fremdkörpern in die Brühkammer sowie ein Ausspülen von Reststoffen aus der Brühkammer zu verhindern. In der gezeigten Ausführungsform weist der Ringspalt 27 eine Breite von 200 µm auf.

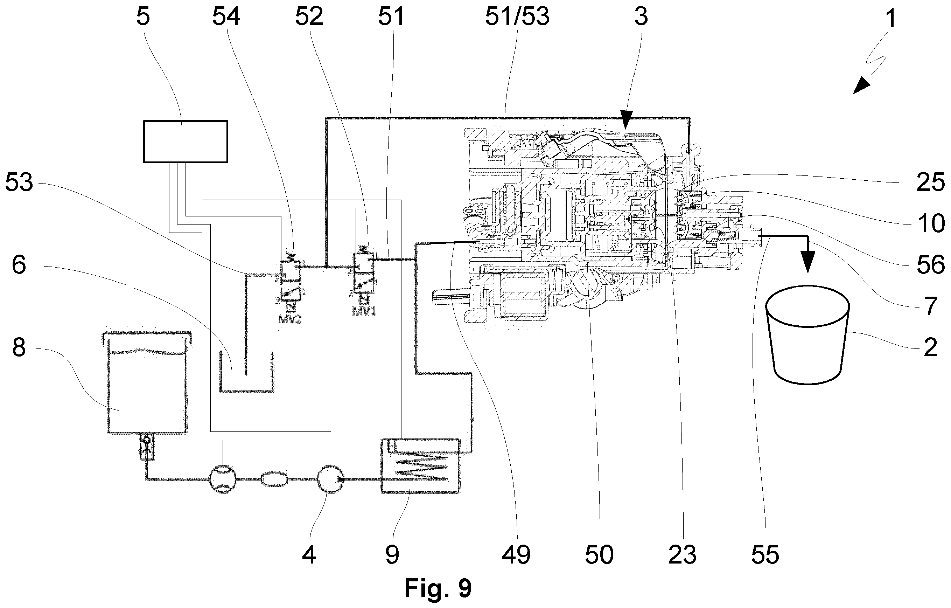

Die Figur 9 zeigt eine Darstellung des Hydraulikschemas einer Getränkezubereitungsmaschine 1 mit einer Brüheinheit 3 wie vorgängig beschrieben. Die Getränkezubereitungsmaschine 1 weist neben der Brüheinheit 3 zusätzlich einen Tank 8 oder einen Frischwasseranschluss auf. Aus diesem Tank 8 oder Frischwasseranschluss wird sowohl die Extraktionsflüssigkeit als auch die Spülflüssigkeit bereitgestellt. Eine Pumpe 4 dient der Förderung der Extraktionsflüssigkeit und der Spülflüssigkeit. Ein Heizelement 9 erhitzt das Wasser auf die für die Extraktion des gewünschten Getränkes benötigte Temperatur.

Eine erste Fluidleitung 49 führt von der Pumpe 4 bzw. dem Heizelement 9 zum Einlass 23 der Brühkammer 10. Zwischen der Pumpe 4 und dem Einlass 23 ist ein erstes Ventil 50 angeordnet. Dieses Ventil 50 ist als Druckventil ausgebildet und stellt sicher, dass die Extraktionsflüssigkeit erst nach Überschreiten eines voreingestellten Druckes das erste Ventil 50 passieren kann. Ausserdem wird sichergestellt, dass ein hydraulischer Anpresskolben 57 (siehe Figur 2) mit seinem Wirkdurchmesser eine genügend grosse Kraft erzeugt, so dass sich der hydraulische Anpresskolben 57 verschieben kann. Ausserdem verhindert dieses Druckventil, dass eine Flüssigkeit aus der Brühkammer 10 in das Heizelement 9 oder die Pumpe 4 zurückfliessen kann.

Eine zweite Fluidleitung 51 führt von der Pumpe 4 bzw. dem Heizelement 9 zum weiteren Zugang 25 der Brühkammer. Dabei ist zwischen der Pumpe 4 und dem weiteren Zugang 25 ein zweites Ventil 52 angeordnet. Durch dieses zweite Ventil 52 kann der weitere Zugang 25 und die Brühkammer 10 mit einer Spülflüssigkeit versehen werden, um beispielsweise eine in der Brühkammer eingesetzte Kapsel 60 (siehe Figur 7) zu benetzen. Gleichzeitig stellt das zweite Ventil 52 sicher, dass bei ausgeschalteter Pumpe 4 keine Spülflüssigkeit in das Heizelement 9 oder die Pumpe 4 zurückfliessen kann.

Eine dritte Fluidleitung 53 verbindet den weiteren Zugang 25 der Brühkammer 10 mit einem Auffangbehälter 6. Die dritte Fluidleitung weist ein drittes Ventil auf. Somit kann sichergestellt werden, dass die Spülflüssigkeit zuerst in die Brühkammer 10 geführt wird, bevor diese nach Verschliessen des zweiten Ventils 52 und Öffnen des dritten Ventils 54 in den Auffangbehälter 6 ausgestossen wird.

Ausgehend vom Auslass 24 (siehe Figur 8) führt eine weitere Fluidleitung als Getränkeauslass 55 zu einer Abgabeöffnung 7 der Getränkezubereitungsmaschine. In der gezeigten Ausführungsform ist in diesem Getränkeauslass 55 ein viertes Ventil 56 angeordnet, welches wiederum als Druckventil ausgestaltet ist. Das vierte Ventil verhindert, dass die Spülflüssigkeit, welche unter Druck der Brühkammer 10 zugeführt wird, durch den Getränkeauslass in einen Becher 2 zur Aufnahme eines von einem Benutzer gewünschten Getränkes fliesst. Da in der geschlossenen Brühkammer 10 vor dem Spülen neben der Kapsel 60 auch ein gewisses Volumen an Umgebungsluft eingeschlossen ist, ermöglicht das vierte Ventil 56 eine Kompression dieses Luftvolumens und somit eine verbesserte Benetzung der Kapsel 60. Ausserdem kann durch dieses vierte Ventil 56 sichergestellt werden, dass die Zubereitung des Getränkes erst ab einem voreingestellten Druck erfolgt, was insbesondere bei der Zubereitung von Kaffee wesentlich zur Qualität beiträgt.

Die Getränkezubereitungsmaschine 1 weist ausserdem eine Steuerung 5 auf, welche die Pumpe 4, das Heizelement 9 und das zweite und dritte Ventil 52, 54 ansteuert. Selbstverständlich kann die Steuerung 5 auch mit Sensoren, beispielsweise einem Durchflussmesser, einem Temperatursensor usw. verbunden sein, deren Signale zur Steuerung beitragen. Auch kann beispielsweise die Bewegung der Brühkammerhälften 11, 12 durch die Steuerung 5 überwacht oder gar mittels geeigneter Antriebe ausgelöst werden.

Zur Zubereitung eines Getränkes wird nach dem Einlegen der Kapsel 60 in den Einwurfschacht 40 die Brühkammer 10 geschlossen. Dies erfolgt durch eine Relativbewegung der beiden Brühkammerhälften 11 und 12. In der dargestellten Ausführungsform bewegt sich die erste Brühkammerhälfte 11 ausgehend von der offenen Stellung, wie in den Figuren 3 und 4 dargestellt, über die halboffene oder halbgeschlossene Stellung gemäss Figur 6 in die geschlossene Stellung gemäss Figur 7. Die Kapsel 60 wird dabei zuerst von den beiden Haltemittel 38 in der Zwischenstellung zwischen den beiden voneinander beabstandeten Brühkammerhälften 11 und 12 auf der Achse 16, gerichtet von der ersten zur zweiten Brühkammerhälfte 11 und 12, gehalten. Sobald sich die Brühkammerhälften 11 und 12 annähern, werden die beiden Haltemittel 38 vom Steuerungsmittel 44 entgegen der Federkraft des Federelementes 41 auseinandergeschoben. Die Kapsel 60 fällt auf einen unteren Rand der bereits etwas zusammengefahrenen Brühkammerhälften 11 und 12. Beim weiteren Zusammenfahren der Brühkammerhälften 11 und 12 wird die Kapsel wieder auf die Achse 16 ausgerichtet. Die Brühkammer 3 kann nun geschlossen werden. Die beiden Brühkammerhälften 11 und 12 bilden mit Hilfe des Dichtelementes 22 eine geschlossene und dichte Brühkammer 3. In der ersten Brühkammerhälfte 11 ist die Injektorplatte 58 mit ihren Perforationsmitteln 32a soweit zurückversetzt, dass sie die Kapsel 60 lediglich berühren, jedoch noch nicht aufstechen. In der zweiten Brühkammerhälfte 12 ist der Auswerfer 30 in einer zurückgezogenen Stellung und gibt die Perforationsmittel 32b frei. Auch auf dieser Seite wird die Kapsel 60 lediglich von den Perforationsmitteln 32b berührt, aber noch nicht perforiert.

Die Steuerung 5 schaltet das Heizelement 9 ein, öffnet das zweite Ventil 52 und gibt die Pumpe 4 für die Förderung von ca. 10 ml Wasser frei. Da sich das erste Ventil 50 erst bei einem voreingestellten Druck öffnet, kann das Wasser somit nur durch die offene zweite Fluidleitung 51 zum weiteren Zugang 25 und in die Brühkammer 3 fliessen. Das Wasser spült die Brühkammer 3 und die darin eingeschlossene Kapsel 60 wird benetzt. Das zweite Ventil 52 wird geschlossen und das dritte Ventil 54 wird geöffnet. Damit wird die dritte Fluidleitung 53 geöffnet. Das Spülwasser kann aus der Brühkammer 3 wieder entweichen. Da in der Brühkammer 3 neben der Kapsel auch ein gewisses Volumen an komprimierter Luft eingeschlossen wurde, wird das Entweichen des Spülwassers begünstigt. Nach ca. 1 s wird das dritte Ventil 54 wiederum geschlossen, der Zugang zum Auffangbehälter 6 ist somit verschlossen. Es wird nochmals das zweite Ventil 52 geöffnet, um eine weitere Menge an Spülwasser in die Brühkammer 3 einzuspritzen. Die Brühkammer 3 wird nochmals geflutet und die Kapsel 60 erneut benetzt. Nach einer Einwirkungszeit von ca. 2 s schliesst das zweite Ventil 52, kurz danach öffnet das dritte Ventil 54. Ein Teil des Spülwassers kann wiederum in den Auffangbehälter 6 abgeführt werden.

Die Pumpe wird bei geschlossenem zweiten Ventil 52 aktiviert und fördert Wasser. Dieses kann sich lediglich in der ersten Fluidleitung 49 bis zum ersten Ventil 50 ausbreiten. Das Wasser fliesst in einen Vorraum 59 eines hydraulischen Anpresskolbens 57, welcher mit der Injektorplatte 58 verbunden ist. Der hydraulische Anpresskolben 57 ist Teil der ersten Brühkammerhälfte 11. Da das erste Ventil erst ab einem voreingestellten Druck, im gezeigten Ausführungsbeispiel ab 7 bar öffnet, wird das durch die Pumpe 4 geförderte Wasser zuerst den Anpresskolben 57 und damit die Injektorplatte 58 antreiben. Dadurch wird aber das Volumen der Brühkammer 3 verringert, die Kapsel 60 wird deformiert und von den Perforationsmitteln 32a und 32b der ersten und der zweiten Brühkammerhälfte 11 und 12 angestochen. Diese Deformation der Kapsel 60 ist insbesondere dann wichtig, wenn die Kapsel 60 einen Pressling als Getränkesubstanz umfasst. Durch die Deformation wird der Pressling nicht nur deformiert, sondern auch aufgebrochen. Die Getränkesubstanz kann somit gleichmässig extrahiert werden. Wenn die Kapsel eine lose Getränkesubstanz beinhaltet, wird durch die Injektorplatte die Kapsel ebenfalls deformiert. Dabei wird die lose Getränkesubstanz verdichtet. Da die Kapsel 60 vor ihrer Deformation mit dem vorzugsweise heissen Spülwasser benetzt wurde, hat sich die Kapselhülle aufgeweicht und kann die Deformation problemlos mitmachen. Die Kapsel 60 passt ihre Form durch das hydraulische Verpressen und Aufweiten durch die injizierte Extraktionsflüssigkeit der Form der Brühkammer 3 an. Da bis zur kompletten Deformation der Kapsel 60, d.h. bis zur Anpassung der Kapselform an die Form der Brühkammer 3, das dritte Ventil 54 noch offensteht, wird das Spülwasser aus der Brühkammer 3 verdrängt und durch den weiteren Zugang 25 und die dritte Fluidleitung 53 dem Auffangbehälter 6 zugeführt.

Die Pumpe 4 fördert weiterhin Wasser, auch wenn die Kapsel 60 komplett deformiert ist und der hydraulische Anpresskolben 57 seine Endposition erreicht hat. Der Druck im Vorraum 59 erhöht sich dadurch weiter. Sobald der voreingestellte Druck, im gezeigten Ausführungsbeispiel 7 bar, erreicht ist, öffnet das erste Ventil 50 und die erste Fluidleitung 49 wird bis zum Einlass 23 freigegeben. Die Perforationsmittel 32a der Injektorplatte 30 sind bereits in die Kapsel 60 eingestochen, so dass das Wasser oder Extraktionsfluid in die Kapsel 60 unter hohem Druck eingespritzt wird. Das Extraktionsfluid dringt in die Kapsel 60 ein, befüllt diese und bläht diese soweit auf, bis die Kapsel 60 die Brühkammer 3 ausfüllt. Der Druck in der Kapsel 60 steigt an bis sich das vierte Ventil 56 im Getränkeauslass 55 öffnet. Spätestens in diesem Moment wird das dritte Ventil 54 geschlossen. Die Extraktionsflüssigkeit durchdringt die Kapsel 60 von deren Einlassseite zur gegenüberliegenden Auslassseite und wird dort als zubereitetes Getränk durch den Auslass im Perforationsmittel 32b aus der Brühkammer austreten. Durch den Getränkeauslass 55 fliesst das Getränk zur Abgabeöffnung 7, wo es in den Becher 2 ausgegeben wird. Das vierte Ventil 56 öffnet erst bei Erreichen eines voreingestellten Drucks, was insbesondere bei der Zubereitung eines Kaffees zu einer qualitativ guten Extraktion führt.

Nach der Förderung der für das gewünschte Getränk benötigten Wassermenge durch die Pumpe 4, stellt diese ab. Ebenfalls wird die Heizleistung des Heizelementes 9 abgestellt. Jetzt wird als erstes das dritte Ventil 54 geöffnet. Ein allfällig vorhandener Druck in der dritten Fluidleitung 53 vom weiteren Zugang 25 kann in den Auffangbehälter 6 abgeleitet werden. Anschliessend wird das zweite Ventil 52 geöffnet. Der aufgebaute Druck in der ersten Fluidleitung 49, insbesondere im hydraulischen Anpresskolben 57 wird somit über das zweite Ventil 52 und das dritte Ventil 54 zum Auffangbehälter 6 abgeleitet. Da das erste Ventil 50 als Druckventil ausgestaltet ist, wird dieses sofort nach Zusammenbruch des Überdrucks schliessen. Entsprechend kann kein Rückstand aus der Brühkammer 3 in das zweite und dritte Ventil 52 und 54 geschwemmt werden. Sobald der Druck im Vorraum 59 des hydraulischen Anpresskolbens 57 nachlässt und die Brühkammer 3 geöffnet ist, fährt dieser aufgrund einer Rückstellfeder 46 wieder in seine ursprüngliche Position zurück und zieht dabei die Injektorplatte 58 mit ihren Perforationsmitteln 32a von der Kapsel 60 weg.

Sobald der Druck in der Getränkezubereitungsmaschine entspannt ist, kann die Bewegung der Brühkammerhälften 11 und 12 wieder freigegeben werden. Beim Öffnen der Brühkammer 3, welche automatisch oder von Hand erfolgen kann, fährt die erste Brühkammerhälfte 11 aus der geschlossenen Position in die offene Position. Die deformierte und extrahierte Kapsel bleibt an den Perforationsmitteln 32b der zweiten Brühkammerhälfte 12 haften. Im letzten Moment der Öffnungsbewegung wird der Auswerfer 30 nach vorne, also in Richtung zur ersten Brühkammerhälfte 11 bewegt, so dass dieser die Kapsel 60 von den Perforationsmitteln 32b abstreift. Gleichzeitig mit dem Auswerfer 30 schenken auch die Haltemittel 38 wieder nach unten, so dass eine am Auswerfer 30 anhaftende Kapsel 60 abgestreift wird.

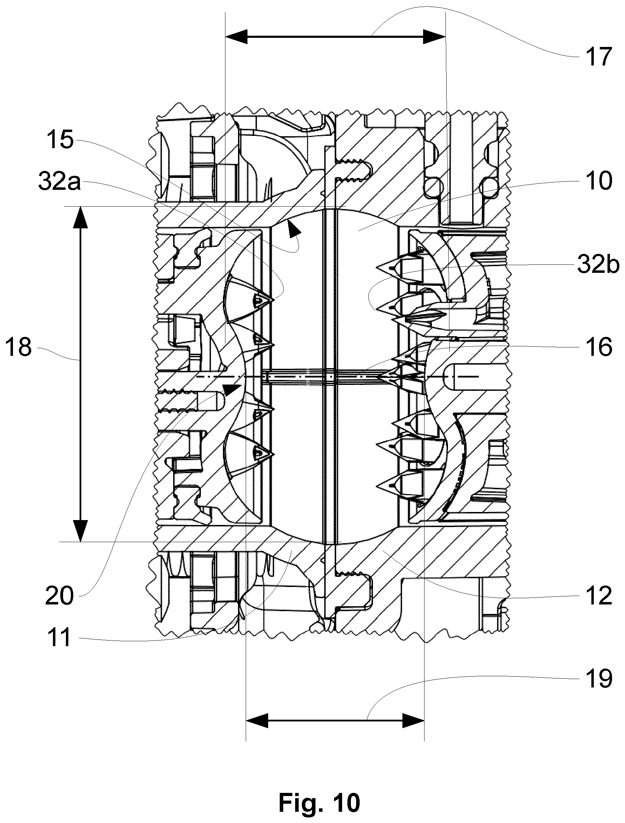

Die Figur 10 zeigt einen Schnitt durch die geschlossene Brühkammer 10 der Brüheinheit 3 entlang der Achse 16 von der ersten zur zweiten Brühkammerhälfte 11 und 12. Die Brühkammer 3 weist eine Brühkammeroberfläche 15 auf, welche abgesehen von den Perforationsmitteln 32a und 32b und einer allfälligen Nut keine scharfen Kanten oder abrupten Richtungswechsel aufweist. Die Brühkammeroberfläche 15 weist eine stetige Krümmung auf, wobei der minimale Krümmungsradius 3 mm beträgt. In der dargestellten Ausführungsform weist die Brühkammeroberfläche 15 keine ebenen Flächen auf.

Die Brühkammer 15 ist im Wesentlichen rotationssymmetrisch ausgestaltet mit der Achse 16 als Symmetrieachse. Der Durchmesser quer zur Achse 16 beträgt 32 mm**.** Die Brühkammer 3 weist in Achsrichtung eine maximale Ausdehnung 17 von 21.3 mm auf. In einem zentralen Bereich, also im Bereich der Achse 16, weist die Brühkammer 3 eine konkave Aussparung 20 auf, so dass die Brühkammer dort eine verringerte Dicke 19 von lediglich 17 mm hat. Es hat sich gezeigt, dass durch diese Form der Brühkammer 3 ein Pressling einer kugelförmigen Kapsel 60 optimal aufgebrochen und extrahiert werden kann.

## Patentansprüche

1. Brühkammerhälfte (11, 12) zum Ausbilden einer Brühkammer (10) mit einer korrespondierenden zweiten Brühkammerhälfte (12, 11) einer Brüheinheit (3) einer Getränkezubereitungsmaschine, wobei die Brühkammerhälfte (11, 12) einen Einlass (23) zum Einleiten einer Brühflüssigkeit zur Getränkezubereitung und/oder einen Auslass (24) zum Ableiten eines zubereiteten Getränks aufweist, wobei die Brühkammerhälfte (11, 12) wenigstens einen weiteren Zugang (25) für das Einleiten und/oder Ausleiten einer Spülflüssigkeit aufweist, **dadurch gekennzeichnet, dass** der weitere Zugang (25) ein Filterelement (26) aufweist.

2. Brühkammerhälfte (11, 12) nach Anspruch 1, wobei die Brühkammerhälfte (11, 12) einen Auswerfer (30) zum Auswerfen der Kapsel (60) aufweist, welcher relativ beweglich zur Brühkammerhälfte (11, 12) ausgebildet ist.

3. Brühkammerhälfte (11, 12) nach Anspruch 2, wobei der weitere Zugang (25) zwischen dem Auswerfer (30) und der Brühkammerhälfte (11, 12) ausgebildet ist.

4. Brühkammerhälfte (11, 12) nach Anspruch 3, wobei das Filterelement als Spalt (27), vorzugsweise als Ringspalt, zwischen dem Auswerfer (30) und der Brühkammerhälfte (11, 12) ausgebildet ist, wobei der Spalt (27) derart dimensioniert ist, dass keine Getränkesubstanz in den Spalt (27) eindringen kann.

5. Brühkammerhälfte (11, 12) nach Anspruch 4, wobei der Spalt (27) eine maximale Breite von 400 µm, bevorzugt von 300 µm, besonders bevorzugt von 200 µm, aufweist.

6. Brühkammerhälfte (11, 12) nach einem der vorhergehenden Ansprüche, wobei die Brühkammerhälfte (11, 12) Perforationsmittel (32a, 32b) zum Perforieren einer Einlassseite oder einer Auslassseite einer Kapsel (60) aufweist, wobei die Perforationsmittel (32a, 32b) vorzugsweise relativ beweglich zur Brühkammerhälfte (11, 12) angeordnet sind.

7. Brühkammerhälfte (11, 12) nach Anspruch 6, wobei der Auswerfer (30) relativ beweglich zum Perforationsmittel (32a, 32b) angeordnet ist.

8. Brüheinheit (3) einer Getränkezubereitungsmaschine, wobei die Brüheinheit (3) eine erste Brühkammerhälfte (11) nach einem der vorhergehenden Ansprüche und eine zweite korrespondierenden Brühkammerhälfte (12) zum Ausbilden einer Brühkammer (10) aufweist.

9. Brüheinheit (3) nach Anspruch 8, wobei wenigstens eine der Brühkammerhälften (11, 12) Perforationsmittel (32a, 32b) zum Perforieren einer Einlassseite oder einer Auslassseite der Kapsel (60) und einen Auswerfer (30) zu Auswerfen und Abstreifen der Kapsel (60) von den Perforationsmitteln (32a, 32b) aufweist, wobei der Auswerfer (30) relativ beweglich zur Brühkammerhälfte (11, 12) und/oder den Perforationsmitteln (32a, 32b) angeordnet ist, **dadurch gekennzeichnet, dass** in der offenen Stellung der Auswerfer (30) die Perforationsmittel (32a, 32b) derart überdeckt, dass diese höchstens unwesentlich vorstehen.

10. Verfahren zum Auswerfen einer Kapsel (60) aus einer Brüheinheit (3) einer Getränkezubereitungsmaschine nach Anspruch 9, wobei beim relativen Bewegen der Brühkammerhälften (11, 12) von der geschlossenen Stellung zum Ausbilden einer Brühkammer (10) und zum Einschliessen und Extrahieren der Kapsel (60) in die offene Stellung zum Ausbringen und Einlegen der Kapsel (60) in einem ersten Schritt sich die Brühkammerhälften (11, 12) voneinander wegbewegen und in einem wenigstens teilweise gleichzeitigen oder nachfolgenden weiteren Schritt sich die Perforationsmittel (32a, 32b) derart relativ zum Auswerfer (30) bewegen, bis diese nicht vorstehen.

11. Verfahren nach Anspruch 10, wobei sich der Auswerfer (30) relativ zur Brühkammerhälfte (11, 12) derart bewegt, so dass dieser aus einer Oberfläche der Brühkammerhälfte (11, 12) vorsteht.

12. Verfahren nach einem der Ansprüche 10 oder 11, wobei sich der Auswerfer (30) relativ zur Brühkammerhälfte (11, 12) erst bewegt, wenn sich die Brühkammerhälften (11, 12) nahezu oder ganz in der offenen Stellung befinden.

13. Verfahren nach einem der Ansprüche 10 bis 12, wobei sich der Auswerfer (30) nur derart relativ zur Brühkammerhälfte (11, 12) bewegt, dass dieser nicht aus der Brühkammerhälfte (11, 12) vorsteht.

14. Getränkezubereitungsmaschine (1) mit einer Brüheinheit (3) gemäss einem der Ansprüche 8 bis 9.

15. System zur Getränkezubereitung umfassend eine Kapsel (60) und eine Brüheinheit (3) gemäss einem der Ansprüche 8 bis 9.

## Claims

1. Brewing chamber half (11, 12) for forming a brewing chamber (10) with a corresponding second brewing chamber half (12, 11) of a brewing unit (3) of a beverage preparation machine, wherein the brewing chamber half (11, 12) has an inlet (23) for introducing a brewing liquid for preparing a beverage and/or an outlet (24) for discharging a prepared beverage, wherein the brewing chamber half (11, 12) has at least one further access (25) for introducing and/or discharging a rinsing liquid, **characterized in that** the further access (25) comprises a filter element (26).

2. Brewing chamber half (11, 12) according to claim 1, wherein the brewing chamber half (11, 12) comprises an ejector (30) for ejecting the capsule (60), which ejector is designed to be movable relative to the brewing chamber half (11, 12).

3. The brewing chamber half (11, 12) according to claim 2,
wherein the further access (25) is formed between the ejector (30) and the brewing chamber half (11, 12).

4. Brewing chamber half (11, 12) according to claim 3, wherein the filter element is formed as a gap (27), preferably as an annular gap, between the ejector (30) and the brewing chamber half (11, 12), wherein the gap (27) is dimensioned such that no beverage substance can penetrate into the gap (27).

5. Brewing chamber half (11, 12) according to claim 4, wherein the gap (27) has a maximum width of 400 µm, preferably of 300 µm, particularly preferably of 200 µm.

6. Brewing chamber half (11, 12) according to any one of the preceding claims, wherein the brewing chamber half (11, 12) comprises perforation means (32a, 32b) for perforating an inlet side or an outlet side of a capsule (60), wherein the perforation means (32a, 32b) are preferably arranged movable relative to the brewing chamber half (11, 12).

7. Brewing chamber half (11, 12) according to claim 6, wherein the ejector (30) is arranged movable relative to the perforation means (32a, 32b).

8. A brewing unit (3) of a beverage preparation machine said brewing unit (3) having a first brewing chamber half (11) according to any one of the preceding claims and a second corresponding brewing chamber half (12) for forming a brewing chamber (10).

9. Brewing unit (3) according to claim 8, wherein at least one of the brewing chamber halves (11, 12) comprises perforation means (32a, 32b) for perforating an inlet side or an outlet side of the capsule (60) and an ejector (30) for ejecting and stripping the capsule (60) from the perforation means (32a, 32b), wherein the ejector (30) is arranged movably relative to the brewing chamber half (11, 12) and/or the perforation means (32a, 32b), **characterized in that** in the open position the ejector (30) covers the perforation means (32a, 32b) in such a way that these project at most insignificantly.

10. A method of ejecting a capsule (60) from a brewing unit (3) of a beverage preparation machine according to claim 9, wherein upon relative movement of the brewing chamber halves (11, 12) from the closed position for forming a brewing chamber (10) and for enclosing and extracting the capsule (60) to the open position for ejecting and inserting the capsule (60) in a first step the brewing chamber halves (11, 12) move away from each other and in an at least partially simultaneous or subsequent further step the perforation means (32a, 32b) move relative to the ejector (30) until they do not protrude.

11. The method of claim 10, wherein the ejector (30) moves relative to the brewing chamber half (11, 12) such that it protrudes from a surface of the brewing chamber half (11, 12).

12. The method of claim 10 or 11, wherein the ejector (30) does not move relative to the brewing chamber half (11, 12) until the brewing chamber halves (11, 12) are nearly or fully in the open position.

13. The method of any one of claims 10 to 12, wherein the ejector (30) only moves relative to the brewing chamber half (11, 12) such that it does not protrude from the brewing chamber half (11, 12).

14. A beverage preparation machine (1) comprising a brewing unit (3) according to any one of claims 8 to 9.

15. A beverage preparation system comprising a capsule (60) and a brewing unit (3) according to any one of claims 8 to 9.

## Revendications

1. Demi-chambre d'infusion (11, 12) destinée à former une chambre d'infusion (10) avec une deuxième demi-chambre d'infusion correspondant (12, 11) d'une unité d'infusion (3) d'une machine de préparation de boissons, la demi-chambre d'infusion (11, 12) comportant une entrée (23) pour introduire un liquide d'infusion destiné à préparer une boissons et/ou une sortie (24) pour évacuer une boisson préparée, la demi-chambre d'infusion (11, 12) comporte au moins un autre accès (25) pour introduire et/ou évacuer un liquide de rinçage, **caractérisée en ce que** l'autre accès (25) comporte un élément filtrant (26).

2. Demi-chambre d'infusion (11, 12) selon la revendication 1, la demi-chambre d'infusion (11, 12) comportant un éjecteur (30) pour éjecter la capsule (60), qui est conçu de manière à être mobile par rapport à la demi-chambre d'infusion (11, 12).

3. Demi-chambre d'infusion (11, 12) selon la revendication 2, l'autre accès (25) étant formé entre l'éjecteur (30) et la demi-chambre d'infusion (11, 12).

4. Demi-chambre d'infusion (11, 12) selon la revendication 3, l'élément filtrant étant formé sous la forme d'une fente (27), de préférence une fente annulaire, entre l'éjecteur (30) et le demi-chambre d'infusion (11, 12), la fente (27) étant dimensionnée de telle sorte qu'aucune substance de la boisson ne puisse pénétrer dans la fente (27).

5. Demi-chambre d'infusion (11, 12) selon la revendication 4, dans laquelle la fente (27) présente une largeur maximale de 400 µm, de préférence de 300 µm, de manière particulièrement préférée de 200 um.

6. Demi-chambre d'infusion (11, 12) selon l'une des revendications précédentes, la demi-chambre d'infusion (11, 12) comportant des moyens de perforation (32a, 32b) pour perforer un côté entrée ou un côté sortie d'une capsule (60), les moyens de perforation (32a, 32b) étant de préférence disposés de manière relativement mobile par rapport à la demi-chambre d'infusion (11, 12).

7. Demi-chambre d'infusion (11, 12) selon la revendication 6, dans laquelle l'éjecteur (30) est disposé de manière mobile par rapport au moyen de perforation (32a, 32b).

8. Unité d'infusion (3) d'une machine de préparation de boissons, l'unité d'infusion (3) comportant une première demi-chambre d'infusion (11) selon l'une des revendications précédentes et une deuxième demi-chambre d'infusion correspondante (12) pour former une chambre d'infusion (10).

9. Unité d'infusion (3) selon la revendication 8, dans laquelle au moins l'une des demi-chambres d'infusion (11, 12) comporte des moyens de perforation (32a, 32b) pour perforer un côté d'entrée ou un côté de sortie de la capsule (60) et un éjecteur (30) pour éjecter et retirer la capsule (60) des moyens de perforation (32a, 32b), l'éjecteur (30) étant mobile par rapport à la demi-chambre d'infusion (11, 12) et/ou les moyens de perforation (32a, 32b), **caractérisé en ce que**, dans la position ouverte, l'éjecteur (30) recouvre les moyens de perforation (32a, 32b) de telle sorte que ceux-ci ne dépassent que de manière insignifiante.

10. Procédé pour éjecter une capsule (60) d'une unité d'infusion (3) d'une machine de préparation de boissons selon la revendication 9, dans lequel, lors du déplacement relatif des demi-chambre d'infusion (11, 12) de la position fermée pour former une chambre d'infusion (10) et pour enfermer et extraire la capsule (60) à la position ouverte pour décharger et insérer la capsule (60) dans une première étape, les demi-chambres d'infusion (11, 12) s'éloignent l'une de l'autre et, dans une étape supplémentaire au moins partiellement simultanée ou suivante, les moyens de perforation (32a, 32b) se déplacent par rapport à l'éjecteur (30) jusqu'à ce qu'ils ne dépassent plus.

11. Procédé selon la revendication 10, dans lequel l'éjecteur (30) se déplace par rapport à la demi-chambre d'infusion (11, 12) de telle sorte qu'il dépasse d'une surface de la demi-chambre d'infusion (11, 12).

12. Procédé selon l'une des revendications 10 ou 11, dans lequel l'éjecteur (30) ne se déplace par rapport à la demi-chambre d'infusion (11, 12) que lorsque les demi-chambres d'infusion (11, 12) se trouvent presque ou entièrement en position ouverte.

13. Procédé selon l'une des revendications 10 à 12, dans lequel l'éjecteur (30) se déplace par rapport à la demi-chambre d'infusion (11, 12) de telle manière qu'il ne dépasse pas de la demi-chambre d'infusion (11, 12).

14. Machine de préparation de boissons (1) avec une unité d'infusion (3) selon l'une des revendications 8 à 9.

15. Système de préparation de boissons comprenant une capsule (60) et une unité d'infusion (3) selon l'une des revendications 8 à 9.
